# EUROPÄISCHE PATENTANMELDUNG

(11) **EP 2 219 421 A1**
(43) Veröffentlichungstag der Anmeldung: **18.08.2010**
(21) Anmeldenummer: 10153806.4
(22) Anmeldetag: 17.02.2010
(51) Int. Cl.: H05B 37/02, H05B 33/08

(54) **Verfahren und Regelsystem zur Regelung des Farbortes eines von einer Leuchte abgegebenen Lichts**

(30) Priorität: 17.02.2009 DE 102009009190
(71) Anmelder: Zumtobel Lighting GmbH, 6850 Dornbirn (AT)
(72) Erfinder: Gassner, Patrik, 6721 St. Gerold 65 (AT); Swoboda, Gerald, 6911 Lochau (AT)
(74) Vertreter: Thun, Clemens

(57) **Zusammenfassung**

Die Erfindung betrifft Verfahren zur Regelung des Farbortes eines von einer Leuchte abgegebenen Lichts, aufweisend folgende Schritte: (a) Erfassung einer Lichteigenschaft von Licht auf einer Fläche, wobei die Fläche relativ zu der Leuchte derart angeordnet ist, dass sie direkt und/oder indirekt von der Leuchte beleuchtet wird, und (b) Regelung des Farbortes des von der Leuchte abgegebenen Lichts in Abhängigkeit von der in Schritt (a) erfassten Lichteigenschaft. Auf diese Weise lässt sich erzielen, dass ein erheblicher Anteil desjenigen Lichts zur Regelung verwendet werden kann, das einen Benutzer der Leuchte üblicherweise treffen kann. Eine Ungenauigkeit, die sich dadurch ergibt, dass das Licht auf seinem Weg von der Leuchte zum Benutzer mehreren Veränderungen unterworfen ist, lässt sich somit vermeiden oder zumindest reduzieren. Weiterhin betrifft die Erfindung ein entsprechendes Regelsystem.

## Beschreibung

Die Erfindung betrifft ein Verfahren sowie ein Regelsystem zur Regelung des Farbortes eines von einer Leuchte abgegebenen Lichts.

Aus dem Stand der Technik ist ein derartiges Verfahren beziehungsweise Regelsystem bekannt, bei dem die Farbtemperatur geregelt wird. Da die Farbtemperatur eine Funktion des Farbortes ist, stellt die Regelung der Farbtemperatur auch eine Regelung des Farbortes dar. Dabei wird gemäß dem Stand der Technik mit Hilfe eines Sensors das Streulicht in der Leuchte erfasst; darauf basierend erfolgt dann eine Regelung, um die gewünschte Farbtemperatur zu erzielen. Ein Problem hierbei ist darin zu sehen, dass das Licht auf seinem weiteren Weg bis zum Auge eines Benutzers der Leuchte mit großer Wahrscheinlichkeit durch Wechselwirkungen mit Oberflächen noch einer weiteren Veränderung unterworfen wird, bevor es einen Benutzer der Leuchte trifft, so dass insoweit das in der Leuchte erfasste Streulicht im Allgemeinen als Referenzwert für ein derartiges Verfahren beziehungsweise Regelsystem mehr oder weniger ungeeignet ist.

Bei der Modulation von Licht, das von einer Leuchte abgegeben wird, kann man zwei Modulationsstufen unterscheiden. Die erste Modulationsstufe erfolgt durch Wechselwirkung des Lichts mit Bauteilen der Leuchte, wie beispielsweise Reflektor, Abdeckung oder Filter. Dabei werden Strahlen des Lichts durch Interaktion mit den Bauteilen in Abhängigkeit von der Materialremission verändert. Dies führt im Allgemeinen zu einer Veränderung der Farbtemperatur des Lichts. Die zweite Modulationsstufe entsteht durch Interaktion des Lichts mit Flächen des umgebenden Raums beziehungsweise mit von dem Licht bestrahlten Objekten. Auch hierbei kann es im Allgemeinen beispielsweise zu einer Veränderung der Farbtemperatur des Lichts kommen.

Der Erfindung liegt die Aufgabe zu Grunde, ein gattungsgemäßes Verfahren beziehungsweise Regelsystem so zu gestalten, dass dabei eine mit der Leuchte erzeugte Beleuchtung noch besser berücksichtigt werden kann.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein Verfahren zur Regelung des Farbortes eines von einer Leuchte abgegebenen Lichts vorgesehen; das Verfahren weist folgende Schritte auf: (a) Erfassung einer Lichteigenschaft von Licht auf einer Fläche, wobei die Fläche relativ zu der Leuchte derart angeordnet ist, dass sie direkt und/oder indirekt von der Leuchte beleuchtet wird, und (b) Regelung des Farbortes des von der Leuchte abgegebenen Lichts in Abhängigkeit von der in Schritt (a) erfassten Lichteigenschaft. Bei der Fläche kann es sich insbesondere um eine Referenz-Messfläche handeln.

Auf diese Weise lässt sich erzielen, dass ein erheblicher Anteil desjenigen Lichts zur Regelung verwendet werden kann, das einen Benutzer der Leuchte üblicherweise treffen kann. Mit anderen Worten kann insbesondere die eingangs genannte "zweite Modulationsstufe" berücksichtigt werden. Eine Ungenauigkeit, die sich dadurch ergibt, dass das Licht auf seinem Weg von der Leuchte zum Benutzer mehreren Veränderungen unterworfen ist, lässt sich somit vermeiden oder zumindest reduzieren.

Vorteilhaft erfolgt dabei in Schritt (b) die Regelung auf Basis eines Referenzwertes, wobei der Referenzwert in Abhängigkeit von der in Schritt (a) erfassten Lichteigenschaft festgelegt wird. Insbesondere kann der Referenzwert ein in Schritt (a) erfasster, die Lichteigenschaft repräsentierender Istwert sein oder zumindest auf diesen zurückgehen. Beispielsweise kann es sich bei der erfassten Lichteigenschaft um den Farbort des Lichts oder die Farbtemperatur des Lichts auf der Fläche handeln. Die erfasste Lichteigenschaft kann beispielsweise direkt als Referenzwert für die Regelung verwendet werden.

Vorteilhaft ist die Leuchte in einem Raum angeordnet ist und die Fläche eine Fläche des Raumes. Beispielsweise kann es sich bei der Fläche um eine Wandfläche des Raumes handeln. Die Wandfläche kann dabei vertikal oder horizontal orientiert sein.

Insbesondere kann vorgesehen sein, dass in Schritt (a) ein Referenzwert auf der Referenz-Messfläche durch einen Sensor erfasst wird, dessen Orientierung und/oder Raumwinkel einstellbar sind. Dadurch lässt sich die Größe der relevanten Referenz-Messfläche auch ohne Veränderung des Abstands zwischen Sensor und Fläche oder eine sonstige Änderung der Montageposition einstellen.

Die Fläche ist vorteilhaft mindestens einen Quadratmeter groß, vorzugsweise mindestens zwei Quadratmeter, beispielsweise mindestens vier Quadratmeter. Je größer der Anteil der Fläche an dem Sichtfeld des Benutzers ist, desto genauer kann im Allgemeinen die Lichtsituation in dem Raum bei der Regelung Berücksichtigung finden.

Vorteilhaft ist die Fläche innerhalb des üblichen Sichtfeldes des Benutzers angeordnet. Beispielsweise kann vorgesehen sein, dass die Fläche mindestens einen Meter breit ist und/oder mindestens einen oder zwei Meter hoch. Es kann vorgesehen sein, dass der Abstand zwischen der Fläche und einer Bodenfläche des Raumes höchstens 50 cm beträgt.

Die Fläche kann beispielsweise diffus oder spiegelnd reflektierend sein.

Vorteilhaft wird in Schritt (a) die Lichteigenschaft von dem Licht erfasst, indem ein von der Fläche in einen unterhalb der Leuchte befindlichen Höhenbereich reflektierter Anteil des Lichts gemessen wird. Dies ermöglicht eine weitere Genauigkeitssteigerung bei der Regelung, weil eine Leuchte üblicherweise oberhalb des Sichtbereichs des Benutzers angeordnet ist.

Gemäß einem weiteren Aspekt der Erfindung ist ein Regelsystem zur Regelung des Farbortes eines von einer Leuchte abgegebenen Lichts vorgesehen; das Regelsystem umfasst eine Fläche, die relativ zu der Leuchte derart angeordnet werden kann, dass sie direkt und/oder indirekt von der Leuchte beleuchtet wird; weiterhin umfasst das Regelsystem einen Sensor zur Erfassung einer Lichteigenschaft von Licht auf der Fläche. Weiterhin umfasst das Regelsystem Mittel zur Regelung des Farbortes des von der Leuchte abgegebenen Lichts in Abhängigkeit von der mit dem Sensor erfassten Lichteigenschaft.

Vorteilhaft ist die Fläche mindestens ein Quadratmeter, vorzugsweise mindestens zwei Quadratmeter, beispielsweise mindestens vier Quadratmeter groß ist.

Vorteilhaft ist dabei die Fläche diffus und/oder spiegelnd reflektierend. Auf diese Weise kann relativ viel Licht an der Fläche reflektiert werden, so dass das von dem Sensor erfasste Signal vergleichsweise stark ist.

Vorteilhaft ist die Fläche vertikal orientiert. Beispielsweise kann die Fläche eine Wandfläche bilden. Auf diese Weise kann die Fläche - bei einer vorgegebenen Größe - einen vergleichsweise großen Anteil an dem üblichen Sichtfeld des Benutzers einnehmen.

Vorteilhaft ist der Sensor dazu ausgebildet, den Farbort und/oder die Farbtemperatur des Lichts zu erfassen. Der Sensor kann dazu ausgebildet sein, von der Fläche reflektiertes Licht zu erfassen.

Vorteilhaft ist das Regelsystem zur Durchführung eines erfindungsgemäßen Verfahrens ausgebildet.

Durch die Erfindung wird berücksichtigt, in welcher Weise das von der Leuchte im Raum abgegebene Licht beeinflusst und letztendlich bei einem Benutzer beziehungsweise Beobachter wahrgenommen wird. Die dann vorliegende Beleuchtungssituation in dem Raum kann hierdurch besser berücksichtigt werden, so dass eine verbesserte Farbort- beziehungsweise Farbtemperatur-Reglung ermöglicht ist.

## Patentansprüche

1. Verfahren zur Regelung des Farbortes eines von einer Leuchte abgegebenen Lichts,
aufweisend folgende Schritte:
(a) Erfassung einer Lichteigenschaft von Licht auf einer Fläche, wobei die Fläche relativ zu der Leuchte derart angeordnet ist, dass sie direkt und/oder indirekt von der Leuchte beleuchtet wird, und
(b) Regelung des Farbortes des von der Leuchte abgegebenen Lichts in Abhängigkeit von der in Schritt (a) erfassten Lichteigenschaft.

2. Verfahren nach Anspruch 1,
bei dem in Schritt (b) die Regelung auf Basis eines Referenzwertes erfolgt, wobei der Referenzwert in Abhängigkeit von der in Schritt (a) erfassten Lichteigenschaft festgelegt wird.

3. Verfahren nach Anspruch 1 oder 2,
bei dem die in Schritt (a) erfasste Lichteigenschaft der Farbort oder die Farbtemperatur des Lichts auf der Fläche ist.

4. Verfahren nach einem der vorhergehenden Ansprüche,
bei dem die Leuchte in einem Raum angeordnet ist und die Fläche eine Fläche des Raumes ist.

5. Verfahren nach einem der vorhergehenden Ansprüche,
wobei die Fläche mindestens einen Quadratmeter, vorzugsweise mindestens zwei Quadratmeter, beispielsweise mindestens vier Quadratmeter groß ist.

6. Verfahren nach einem der vorhergehenden Ansprüche,
bei dem in Schritt (a) die Lichteigenschaft von dem Licht erfasst wird, indem ein von der Fläche in einen unterhalb der Leuchte befindlichen Höhenbereich reflektierter Anteil des Lichts gemessen wird.

7. Regelsystem zur Regelung des Farbortes eines von einer Leuchte abgegebenen Lichts, umfassend
- eine Fläche, wobei die Fläche relativ zu der Leuchte derart angeordnet werden kann, dass sie direkt und/oder indirekt von der Leuchte beleuchtet wird,
- einen Sensor zur Erfassung einer Lichteigenschaft von Licht auf der Fläche, und
- Mittel zur Regelung des Farbortes des von der Leuchte abgegebenen Lichts in Abhängigkeit von der mit dem Sensor erfassten Lichteigenschaft.

8. Regelsystem nach Anspruch 7,
wobei die Fläche mindestens ein Quadratmeter, vorzugsweise mindestens zwei Quadratmeter, beispielsweise mindestens vier Quadratmeter groß ist.

9. Regelsystem nach Anspruch 7 oder 8,
bei dem die Fläche diffus und/oder spiegelnd reflektierend ist.

10. Regelsystem nach einem der Ansprüche 7 bis 9,
bei dem die Fläche vertikal orientiert ist, vorzugsweise eine Wandfläche bildet.

11. Regelsystem nach einem der Ansprüche 7 bis 10,
bei dem der Sensor dazu ausgebildet ist, den Farbort und/oder die Farbtemperatur des Lichts zu erfassen.

12. Regelsystem nach einem der Ansprüche 7 bis 11,
bei dem der Sensor dazu ausgebildet ist, von der Fläche reflektiertes Licht zu erfassen.

13. Regelsystem nach einem der Ansprüche 7 bis 12,
das zur Durchführung eines Verfahrens nach einem der Ansprüche 1 bis 6 ausgebildet ist.
